# EUROPEAN PATENT APPLICATION

(11) **EP 1 122 463 A2**
(43) Date of publication of application: **08.08.2001**
(21) Application number: 01102004.7
(22) Date of filing: 30.01.2001
(51) Int. Cl.: F16H 3/091

(54) **Low inertia, clutchable shaft for transmissions**

(30) Priority: 31.01.2000 GB 0001996
(71) Applicant: EATON CORPORATION, Cleveland, Ohio 44114-2584 (US)
(72) Inventor: Friel, Dominic Philip, Heaton Norris, Stockport SK4 1QZ (GB)
(74) Representative: Patentanwälte Rüger, Barthelt & Abel

(57) **Abstract**

A sychronized transmission structure (100) providing a relatively low inertia for the synchronized jaw clutches (50, 52, 54) to act upon. The transmission input shaft (104) is splined to the master clutch driven members (14B), carries the synchronized jaw clutches for rotation therewith and supports the drive gears (106, 108, 110, 112 and 114) for rotation thereon by means of needle bearings (48) or the like. Countershaft gears (118, 120, 124, 126 aqnd 128) are constantly meshed with a drive gear or an idler meshced to a drive gear. The transmission output shaft (102) carries an output gear (132) fixed thereto, which is constantly meshed with a countershaft gear (130).

## Description

### BACKGROUND OF THE INVENTION

### FIELD OF THE INVENTION

The present invention relates to a low-inertia shaft structure for transmissions, preferably synchronized transmissions. In particular, the present invention relates to a transmission structure wherein the ratio or main section clutches, usually manually engaged, synchronized jaw clutches, are carried on the input shaft to provide a low-inertia shaft assembly requiring minimized, substantially constant force to engage a selected ratio.

### DESCRIPTION OF THE PRIOR ART

Synchronized simple and compound transmissions for vehicles, such as heavy-duty vehicles (greater than 10,000 pounds gross combined weight) are well known in the prior art. Examples of such transmissions may be seen by reference to U.S. Pats. No. 4,754,663; 5,370,013; 4,567,785; 4,722,237; 4,152,949 and 4,271,724, the disclosures of which are incorporated herein by reference.

In such transmissions, the clutches are typically carried by the output shaft in a simple transmission or by the main shaft in a compound transmission. For simple transmissions, this means that the clutches and shaft associated therewith are constantly attached to the inertia of the vehicle load. The same is true for compound transmissions unless the output auxiliary section is moved to and maintained in a disengaged (neutral) condition during shifting of the mean section (see U.S. Pat. No. 4,788,889). This often results in an undesirably high force required to operate the synchronized clutches of a heavy-duty vehicle transmission.

### SUMMARY OF THE INVENTION

In accordance with the present invention, the drawbacks of the prior art are minimized or overcome by providing a transmission structure wherein the inertia of the vehicle load is disconnected from the ratio section clutches during shifting. The foregoing is accomplished by providing a transmission structure wherein all of the lever-shifted jaw clutches, preferably synchronized jaw clutches, are carried by the input shaft.

Accordingly, a transmission system is provided with an input shaft that, when the master clutch and transmission are disengaged, is of relatively low inertia, reducing the force necessary to synchronize and shift same.

This and other objects and advantages of the present invention will become apparent from a reading of the following description of the preferred embodiment taken in connection with the attached drawings.

### BRIEF DESCRIPTION OF THE DRAWINGS

Fig. 1 is a schematic illustration of a typical prior art 5-speed synchronized transmission.

Fig. 2 is a schematic illustration of the inertia-creating structures associated with the clutch member carrying the (output) shaft of the transmission of Fig. 1.

Fig. 3 is a schematic illustration of a 5-speed synchronized transmission according to the present invention.

Fig. 4 is a schematic illustration of the inertia-creating structures associated with the (input shaft) clutch member carrying shaft of the transmission of Fig. 3.

Fig. 5 is a schematic illustration of an alternate embodiment of a 5-speed synchronized transmission according to the present invention.

Fig. 6 is a schematic illustration of a compound transmission according to the present invention.

### DESCRIPTION OF THE PREFERRED EMBODIMENT

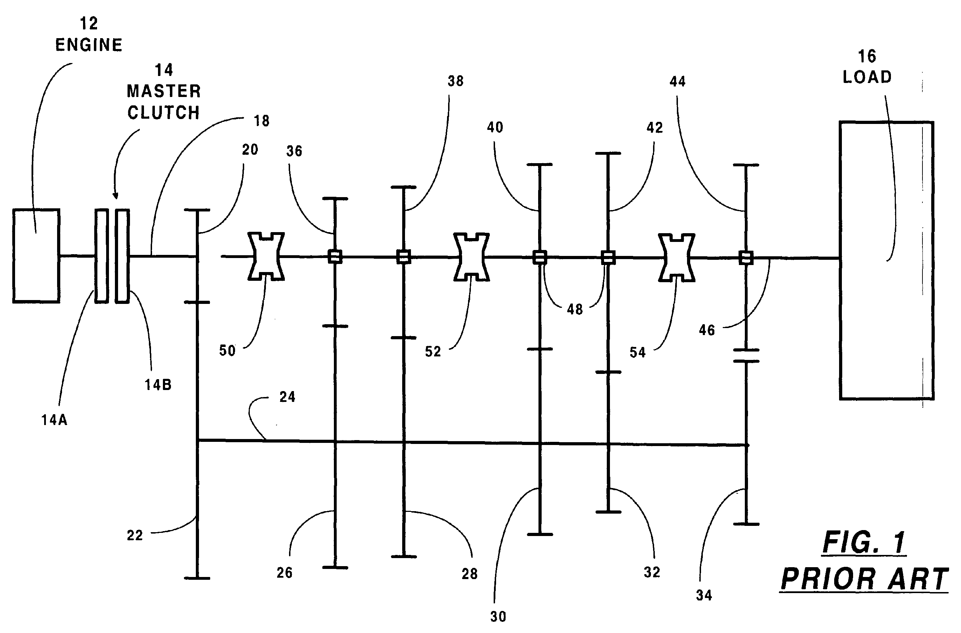

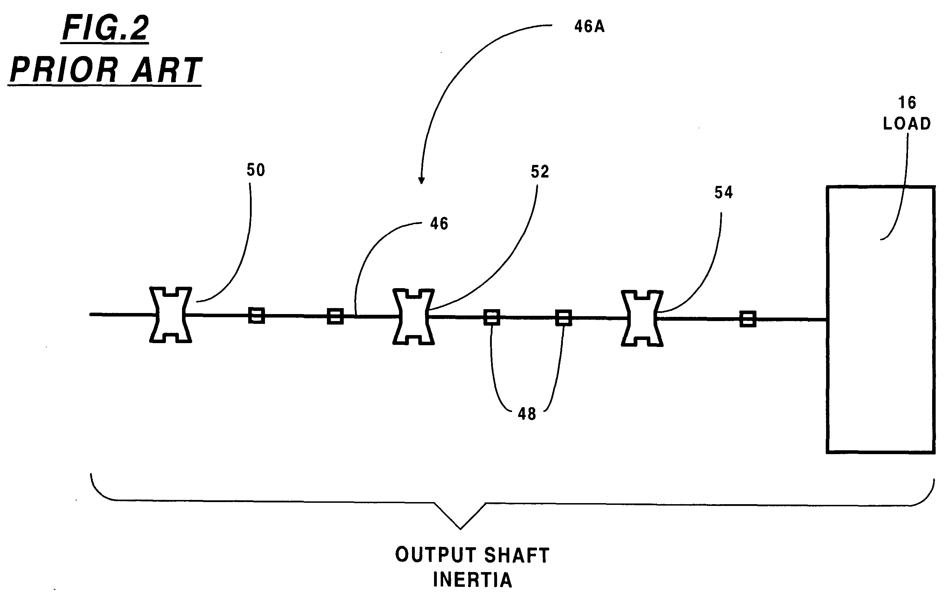

Figs. 1 and 2 are schematic illustrations of a typical prior art 5-forward-speed, one-reverse-speed, synchronized transmission 10. Transmission 10 is drivingly connected to an engine, such as a diesel engine 12, by a selectively engaged and disengaged master friction clutch 14 and is adapted to drive a load (the vehicle) 16. Medium- and heavy-duty vehicles will typically have a gross combined weight (GCW) of between 10,000 and 80,000 pounds.

Transmissions of this general type will have 4-7 forward speeds and are manually shifted by means of synchronized jaw clutches. Examples of such transmissions and synchronizers may be seen by reference to U.S. Pats. No. 4,788,889; 5,497,867; 4,462,489 and 3,221,851.

Engine 12 will drive the input elements 14A of master clutch 14, which may be frictionally engaged and disengaged from the clutch output elements 14B splined to input shaft 18. Input shaft 18 carries an input gear 20 rotationally fixed thereto, which meshes with a countershaft gear 22 fixed to countershaft 24. Countershaft 24 also carries countershaft gears 26, 28, 30, 32 and 34 fixed thereto.

Drive gears 36, 38, 40, 42 and 44 are rotationally supported on an output shaft 46 drivingly connected to the load by means of needle or roller bearings 48. Drive gears 36, 38, 40 and 42 are meshed with countershaft gears 26, 28, 30 and 32, respectively, while reverse drive gear 44 is meshed with a reverse idler (not shown), which is meshed with countershaft gear 34.

Double-sided, synchronized jaw clutch members 50, 52 and 54 are carried by the output shaft 46 for selectively clutching the drive gears, one at a time, to the output shaft 46.

As is well known, the synchronized clutch members are axially positioned by shift forks (not shown) associated with a shift bar housing assembly (not shown) or the like. Clutch 54 may clutch either gear 44 or 42 to the output shaft to engage reverse or first gear, respectively. Clutch 52 may clutch either gear 40 or 38 to the output shaft to engage second or third gear, respectively. Clutch 50 may clutch either gear 36 or 20 to the output shaft to engage fourth or fifth speed, respectively.

Fig. 2 schematically illustrates the rotating inertia associated with the output shaft assembly 46A of a prior art synchronized transmission. This is the inertia that must be overcome by the synchronizers of the synchronized jaw clutches 50, 52 or 54 to cause the engaging jaw clutch member to rotate at a synchronous speed with the gear being engaged. As may be seen, in addition to the inertia of the shaft 46, the clutches 50, 52 and 54, and the bearing 48, the synchronizers of the clutches are also subject to the relatively massive inertia of the load 16.

In the prior art transmissions, the relatively large inertia to be overcome by the synchronized jaw clutches often results in undesirably high force requirements by the vehicle driver to complete a shift.

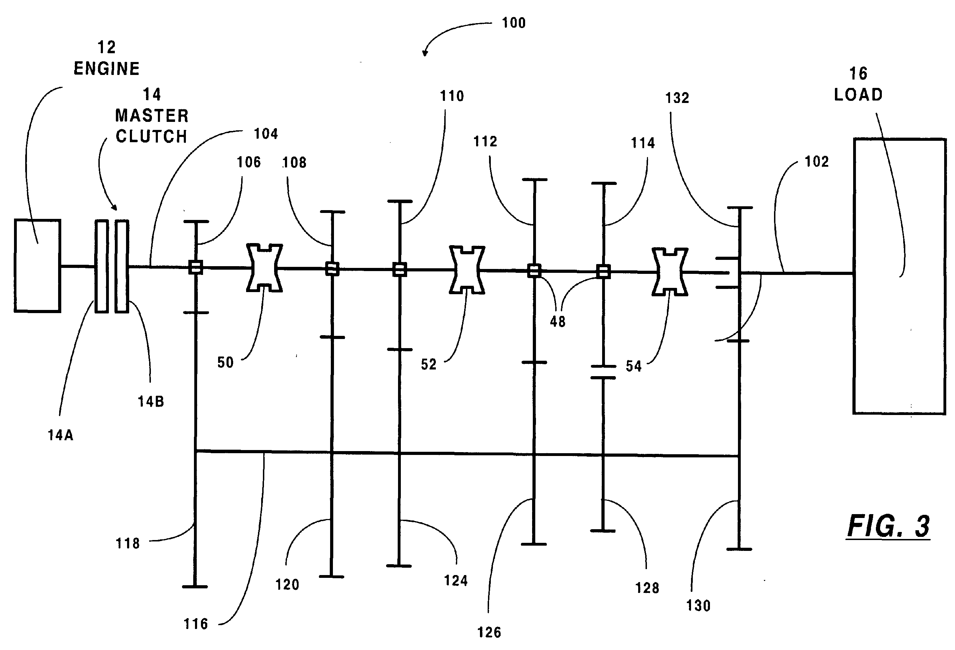

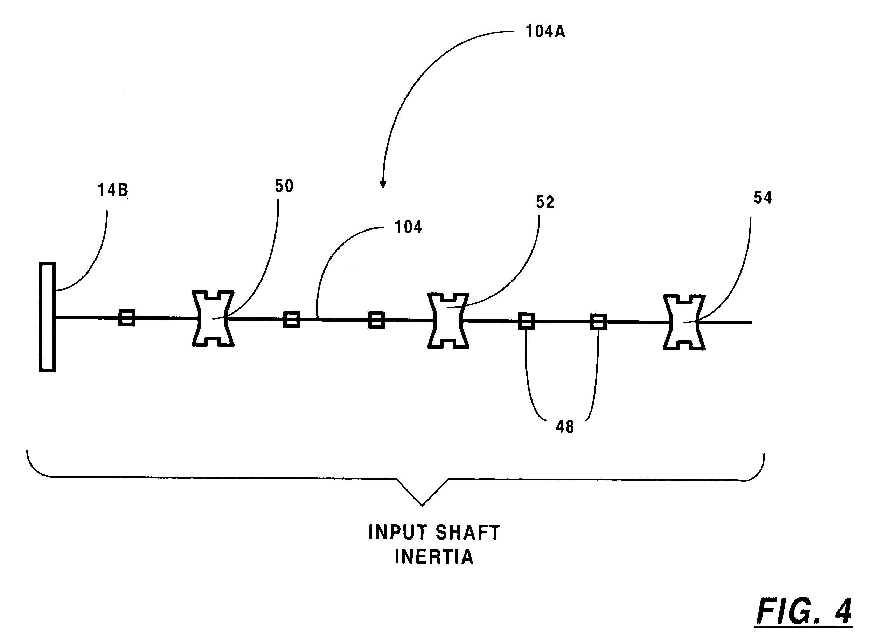

Figs. 3 and 4 illustrate a preferred embodiment of a 5-speed synchronized transmission 100 utilizing the improved structure of the present invention. Elements of the transmission 100 illustrated in Figs. 3 and 4 which are structurally and functionally identical or substantially identical to elements of transmission 10 are assigned like reference numerals.

Five-forward-speed, one-reverse-speed transmission 100 is drivingly connected to engine 12 by means of selectively engaged and disengaged master friction clutch 14 and includes an output shaft 102 drivingly connected to the vehicle load 16.

Transmission 100 includes a relatively elongated input shaft 104, which is splined to the output elements 14B of the master clutch and which also carries the synchronized jaw clutch members 50, 52 and 54 for rotation therewith, as well as supporting input drive gears 106, 108, 110, 112 and 114 for rotation relative thereto on needle or ball bearings 48. A countershaft 11 6 is generally parallel to an axially offset the input shaft 104 and output shaft 102 and carries countershaft gears 118, 120, 124, 126, 128 and 130 fixed for rotation therewith. Countershaft gears 118, 120, 124 and 126 are constantly meshed with input drive gears 106, 108, 110 and 112, respectively. Countershaft gear 128 is constantly meshed with a reverse idler gear (not shown), which in turn is meshed with the reverse input drive gear 114. Countershaft gear 130 is constantly meshed with an output gear 132 fixed for rotation on output shaft 102. Clutch 54 may clutch either gear 132 or 114 to the input shaft 104 for fifth speed or reverse operation, respectively. Clutch 52 may clutch either gear 112 or 110 to the input shaft 104 for first gear or second gear, respectively. Clutch 50 may clutch either gear 108 or 106 to the input shaft 104 for third gear or fourth gear operation, respectively.

It is recognized that the layout of transmission 100 will require a modified shift bar housing assembly to provide a standard H-type progressive shift pattern.

Fig. 4 schematically illustrates the rotating inertia associated with the input shaft assembly 104A of the synchronized transmission 100 of the present invention. This is the inertia that must be overcome by the synchronizers of the synchronized jaw clutches 50, 52 or 54 to cause the engaging jaw clutch member to rotate at a synchronous speed with the gear being engaged. As may be seen, in addition to the inertia of the input shaft 104, the clutches 50, 52 and 54, and the bearings 48, the synchronizers are also subject to the rotating inertia of the driven clutch disk 14B. With the master clutch fully disengaged, assuming a well-adjusted master clutch, the rotating inertia of the driven master clutch members 14B is relatively minute compared to the rotating inertia of the load 16. Accordingly, it may be seen that by utilizing the structure of the present invention, the rotating inertia required to be overcome by the synchronized clutches is considerably reduced, thus providing an easier transmission to shift.

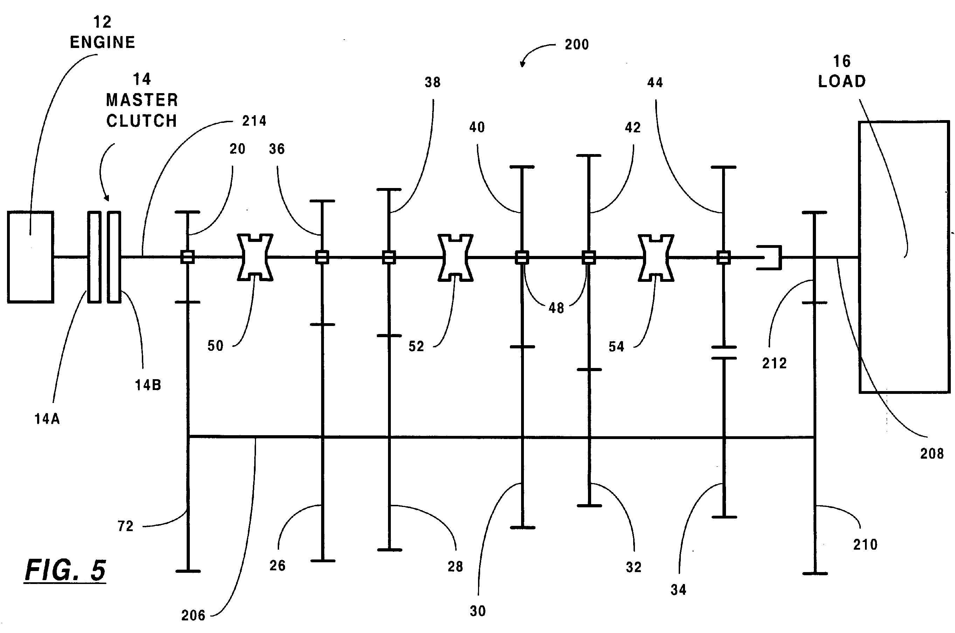

Fig. 5 illustrates an alternate embodiment of a 5-speed transmission 200 utilizing the improved structure of the present invention. Transmission 200 differs from transmission 100 principally in that an extra set of gearing is utilized, which allows the transmission to maintain a standard progressive H-type shift pattern without the use of a specially configured shift bar housing assembly.

In transmission 200, the driven members 14B of the master friction clutch 14 are splined to an elongated input shaft 204. In addition to supporting the synchronized jaw clutch members 50, 52 and 54, the input shaft 204 supports input drive gears 20, 36, 38, 40, 42 and 44, which, with the exception of gear 44, which meshes with a reverse idler (not shown), are constantly meshed with countershaft gears 22, 26, 28, 30, 32 and 34, respectively, fixed to a countershaft 206, which is substantially parallel to but offset the input shaft 204 and output shaft 208. The output shaft 208 which is drivingly connected to the load 15. Countershaft 206 also carries a countershaft gear 210, which meshes with an output gear 212 fixed to the output shaft 208.

By utilizing an additional gear layer (gears 44 and 34) as compared to transmission 100, transmission 200 retains a progressive engagement pattern, allowing a standard H-type shift pattern and the use of an unmodified shift bar housing assembly. Clutch member 54 may be utilized to clutch either gear 44 or 42 to the input shaft 204 for reverse or first gear operation. Clutch 52 may be utilized to clutch either gear 40 or 38 to the input shaft 204 for second or third gear operation, respectively. Clutch 50 may be utilized to clutch either gear 36 or 20 to the input shaft 24 for fourth gear or fifth gear operation, respectively.

The input shaft drive gears are all supported on the input shaft by means of ball or needle bearings 48, as was the case with transmissions 10 and 100 described above.

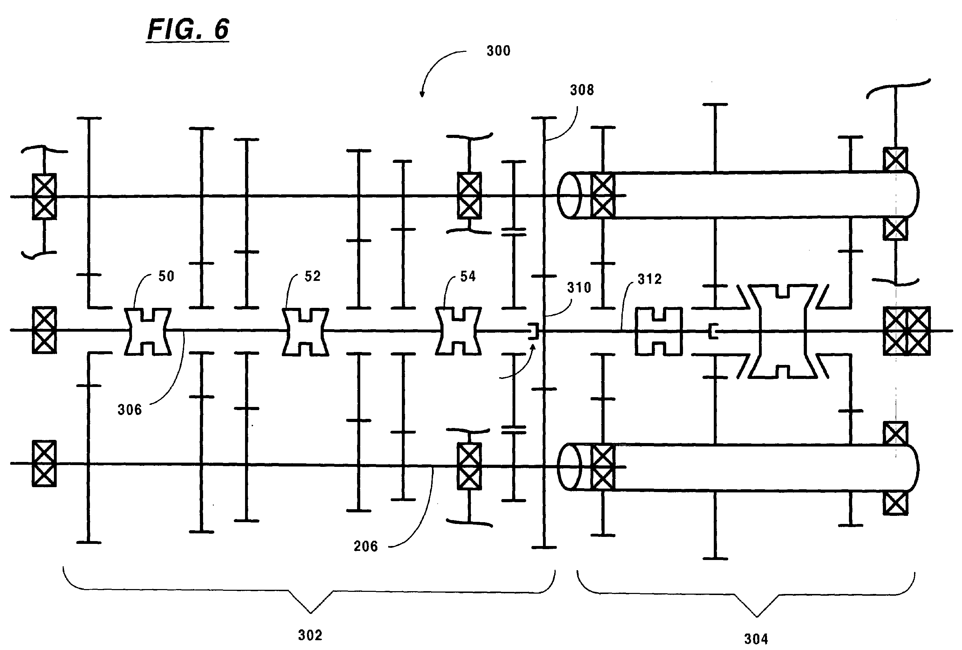

Fig. 6 schematically illustrates a compound, twin countershaft transmission providing up to 20 forward drive ratios and utilizing the transmission structure of the present invention. Transmission 300 includes a manually shifted, synchronized main transmission section 302 and a combined splitter-and-range-type auxiliary section 304. Compound transmissions of this type are known in the prior art and may be seen in greater detail by reference to U.S. Pats. No. 4,754,665; 5,390,561 and 5,546,823, the disclosures of which are incorporated herein by reference. The combined splitter-and-range-type auxiliary section 304 utilized in transmission 300 is substantially functionally and structurally identical to the auxiliary sections described in detail in aforementioned U.S. Pats. No. 4,754,665 and 5,546,823 and will not be described again in detail. In the main section 302 of transmission 300, the elongated input shaft 306 carries all of the synchronized jaw clutch members 50, 52 and 54, as was the case in transmissions 100 and 200 described above. An extra layer of gearing, countershaft gears 308 and main section output gear 310, are provided, with gear 310 being fixed to the shaft 312, defining the output shaft of the main transmission section and the input shaft of the auxiliary transmission section. As was the case with transmissions 100 and 200 described above, with the main section in neutral and the master clutch fully disengaged, the main section jaw clutch synchronizers are exposed to a relatively low inertia, which does not include the inertia of the auxiliary transmission section 304 or the inertia of the load (not shown).

Accordingly, it may be seen that a new and improved transmission structure is provided for manually shifted, synchronized transmissions which, when the transmission is in neutral and the master clutch is fully disengaged, will considerably reduce the inertia to which the synchronizers are subjected during engagement of a target gear ratio.

Although the present invention has been described with a certain degree of particularity, it is understood that various changes to form and detail may be made without departing from the spirit and scope of the invention as hereinafter claimed.

## Claims

1. A vehicular transmission (100) comprising an input shaft (104), an output shaft (102) coaxial with said input shaft and rotatable relative thereto, a countershaft (116) substantially parallel to said input shaft, rotatable relative to said input shaft and carrying a plurality of countershaft gears (118, 120, 124, 116, 128 and 130) fixed for rotation therewith, a plurality of axially spaced drive gears (106, 108, 110 and 112) supported on said input shaft for rotation relative thereto, each of said drive gears constantly meshed with one of said countershaft gears, a plurality of clutches (50, 52 and 54) for selectively engaging a selected drive gear to said input shaft, and an output gear (132) fixed to said output shaft and meshed with one of said countershaft gears.

2. The transmission of claim 1 wherein said transmission is a simple transmission and said output shaft is drivingly connected to a vehicle load (16).

3. The transmission of claim 1 wherein said drive gears are supported on said input shaft by means of bearings (48).

4. The transmission of claim 3 wherein said bearings are needle bearings.

5. The transmission of claim 1 wherein said clutches are synchronized jaw clutches.

6. The transmission of claim 1 further including shifting means allowing said clutches to selectively engage one of said gears at a time to said input shaft.

7. A compound transmission (300) comprising a synchronized main transmission section (302) connected in series with an auxiliary transmission section (304), said transmission characterized by said main transmission section comprising:
an input shaft (306), an intermediate shaft (312) coaxial with said input shaft, rotatable relative thereto and extending from said main transmission section into said auxiliary transmission section, and
a countershaft (206) substantially parallel to said input shaft and said connecting shaft, carrying a plurality of countershaft gears fixed for rotation therewith,
a plurality of axially spaced input drive gears surrounding said input shaft and rotatable relative thereto, said drive gears constantly meshed with a countershaft gear or an idler gear meshed with a countershaft gear,
synchronized jaw clutches rotationally fixed to said input shaft for selectively engaging a selected input drive gear, one at a time, to said input shaft, and
a main section output gear (310) rotationally fixed to said intermediate shaft (312) and meshed with a countershaft gear (308).

8. The compound transmission of claim 7 wherein said main section comprises a pair of substantially identical countershafts carrying a plurality of substantially identical countershaft gears, each pair of substantially identical countershaft gears constantly meshed with and supporting an input drive gear.
